(19) Europäisches Patentamt
European Patent Office
Office européen des brevets

(11) **EP 0 745 782 A2**

(12) **EUROPEAN PATENT APPLICATION**

(43) Date of publication:
04.12.1996 Bulletin 1996/49

(51) Int. Cl.⁶: **F16F 15/03**

(21) Application number: 96108145.2

(22) Date of filing: 22.05.1996

(84) Designated Contracting States:
AT CH DE LI

(30) Priority: 26.05.1995 IT MI951091

(71) Applicant: SAPORITI S.r.l.
21058 Solbiate Olona (VA) (IT)

(72) Inventor: Saporiti, Silvano
1058 Solbiate Olona (VA) (IT)

(74) Representative: Marietti, Giuseppe
MARIETTI e GISLON S.r.l.
Via Larga, 16
20122 Milano (IT)

(54) **Device for damping induced oscillation in a rotating shaft**

(57) A device for the damping of the induced oscillations in a rotating shaft comprises an electrical circuit endowed with suitable components at least to realize the function of damping and means of coupling between the rotating shaft and the electric circuit for effecting the conversion between mechanical energy and electrical energy.

Fig. 2

## Description

The present invention relates to a device for the damping of induced oscillations in a rotating shaft.

The phenomenon of induced oscillations is well known in the art and is particularly evident where the resistant torque applied to the rotating shaft is discontinuous or periodic. The oscillations could be partially limited by connecting a simple flywheel to the rotating shaft - a flywheel, as is known, is a device capable of storing kinetic energy during the phase of free rotation of the shaft, and releasing it during the phase of braked rotation.

However, the use of a simple flywheel alone is not sufficient to guarantee damping of the oscillations; it is necessary to employ a device that introduces a viscous friction in phase with the induced oscillation, e.g. a braking device that acts on the same flywheel.

The phenomenon of the induced oscillations on a rotating shaft is found, for instance, in machine-tools, and particularly in milling machines that employ a toothed tool for the removal of material from the piece being machined. The resistant torque varies periodically as a result of the impact of the teeth of the motor-driven tool on the piece being machined.

The induced oscillations are harmful for the same machine-tool and constitute a source of very elevated noise which jeopardizes the quality of the work-environment for the machine-tool operators.

In general, the application of a flywheel and of a braking device on the same, while it might be judged effective, is not easily very practical. In the case of machine-tool applications, the excessive encumbrance constituted by the flywheel is not compatible with the available space, and the presence of a rotating mass connected to the shaft, despite the necessary precautions, could be cause of serious accidents.

In any case, the need to disperse the considerable quantity of heat caused by the friction between the braking device and the flywheel excludes all possibility of using a similar device effectively in practice.

The object of the present invention is to resolve the drawbacks of the known technique in a simple and effective way.

Within the scope of this object, one aim is to produce a device that effectively dampens the oscillations to which a rotating shaft is subject.

Another aim of the present invention is to produce a damping device that has particularly reduced dimensions.

A further object of the present invention is to produce a damping device that can be produced easily and economically, and can also be retro-fitted easily to machine-tools.

These objects are achieved by the present invention which relates to a device for the damping of induced oscillations in a rotating shaft, characterized by comprising at least one electrical circuit endowed with suitable components to produce the function of damping and means for coupling the rotating shaft and the electric circuit to effect the conversion of mechanical energy to electrical energy.

The invention also relates to a motor unit for machine-tools of the type comprising at least one principal motor that furnishes mechanical power to a machine-tool and means of reducing the oscillations induced in the rotating shaft of the principal motor due to the impact of the tool on the piece being machined, characterized by comprising an induced-oscillation damping device like that already described.

Such a device damps the oscillations induced in a rotating shaft effectively avoiding the installation of bulky and dangerous devices, such as flywheels or similar devices.

It is in fact particularly simple to control the electric signal representative of the oscillations induced in the rotating shaft in such a way as to synchronize the electrical energy in the circuit and the consequent supply of mechanical energy to oppose the induced oscillations.

The means for coupling the electric circuit and the rotating shaft comprise a reversing dynamoelectric machine whose rotor is connected mechanically to the rotating shaft of a machine-tool, while the electric circuit is connected to the terminals of the dynamoelectric machine.

The term "reversing" referred to the dynamoelectric machine is understood to mean an electric machine able to work as a generator of electrical energy when mechanical energy is applied to the shaft of the rotor, and to work vice-versa as a motor, producing mechanical energy, when electrical energy is applied to the terminals of the induction windings.

In particular, the reversing dynamoelectric machine is preferably of the type with permanent magnets excitation.

This type of machine is particularly suitable not only for its simple construction, but also because it doesn't require any type of additional current supply to generate the induced magnetic field and is therefore simple to install and to check. As an alternative, use could be made of any dynamoelectric machine that presents the same reversibility characteristics.

Analog-type components are preferably used in the electric circuit connected to the leads of the dynamoelectric machine, as they allow easy and rapid checking of the voltage and current of the dynamoelectric machine in use.

In particular, in the damping device according to the invention, an electrical circuit comprising at least one capacitor, or a battery of capacitors however connected, is employed. The capacitor, which is the electrical equivalent of the mechanical flywheel, carries out the oscillation-damping function by controlling the electrical quantities in the circuit connected to the dynamoelectric machine.

A variable resistor is advantageously inserted in the electric circuit connected to the terminals of the dynamoelectric machine. The variable resistor is the electrical equivalent of a suitable mechanical device to introduce variable friction. The variable resistor, connected for instance in series to the capacitor, allows an accurate control of the response signal to the induced-oscillation from the rotating shaft, and it avoids the well known resonance phenomena typical of the forced-oscillations control systems.

Beyond the already-quoted advantages, permanent-magnet excited dynamoelectric machines are, like the components of the electric circuit, readily available on the market at reasonable cost.

It is also evident that, due to the its simplicity in production, the damping device according to the invention could easily be applied to any machine-tool in which there is a rotating shaft subject to induced oscillations.

These and other advantages will be clearer from the description that follows, which is illustrative but not limiting, with reference to the attached drawings in which:

- figure 1 is a schematic representation of an application of the damping device according to the invention;
- figure 2 is a scheme that illustrates the preferred embodiment of a damping device according to the invention;
- figure 3A is a graph that represents, as a function of time, a possible wave-form of the excitation signal;
- figure 3B is a graph that represents, as a function of time, the angular velocity of the shaft of the dynamoelectric machine in response to the excitation illustrated in figure 3A, before optimization of the capacitance and resistance of the circuit in accordance with the characteristics of the dynamoelectric machine used;
- figure 3C is a graph that represents, as a function of time, the angular speed of the shaft of the dynamoelectric machine in response to the excitation torque illustrated in figure 3A, after optimization of the capacitance and resistance of the circuit in accordance with the characteristics of the dynamoelectric machine used;
- figure 4A is a graph that represents, as a function of time, a second wave-form of the excitation torque;
- figure 4B is a graph that represents, as a function of time, the angular velocity of the shaft of the dynamoelectric machine in response to the excitation torque illustrated in figure 4A, based on a first embodiment of the non-optimized device; and
- figure 4C is a graph that represents, as a function of time, the angular speed of the shaft of the dynamoelectric machine in response to the excitation torque illustrated in figure 4A, based on a second embodiment of the optimized device.

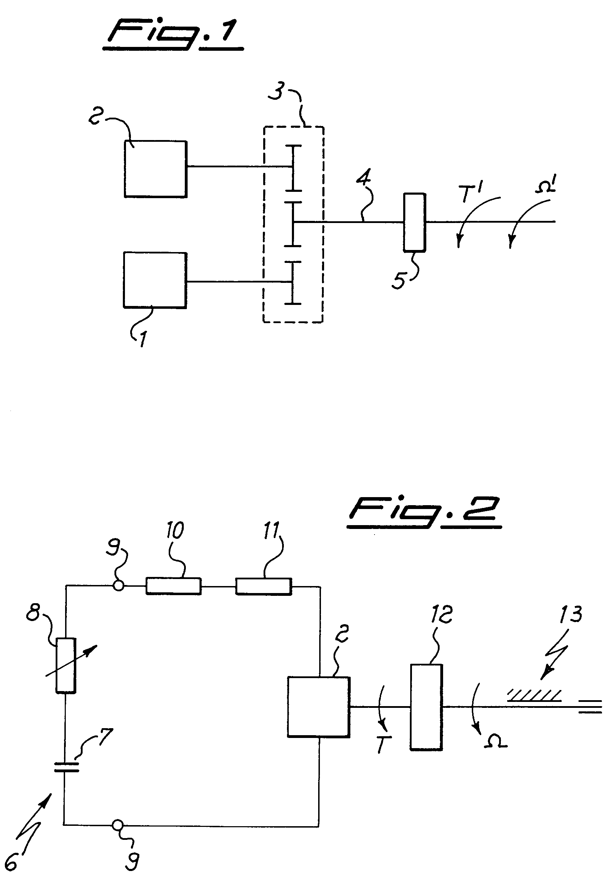

Figure 1 illustrates an application of the device according to the invention, showing a principal motor 1 mechanically connected to a dynamoelectric machine 2 and to a rotating shaft 4 by means of a transmission device 3.

The rotating shaft 4, whose speed and torque parameters are the arrows $\Omega'$ and $T'$ respectively, bears a load 5 having moment of inertia of value $J'$.

Figure 2 illustrates the damping device according to the invention, comprising the dynamoelectric machine 2 and an electric circuit 6 comprising a capacitor 7 of $Ce$ capacitance and a variable resistor 8, that is set to a value indicated below as $Re$, connected in series between the terminals 9 of the dynamoelectric machine 2. The other elements of the circuit 6 are the resistance 10, of value $R_a$, and the inductance 11, of value $L_a$, of the dynamoelectric machine 2.

The introduction of a resistance and of a capacitance is equivalent to introducing an electrical oscillation comprising a component in phase, a component in quadrature and late, and a component in quadrature but in advance with respect to the forcing oscillation. The latter is generated by the mechanical oscillation transmitted by the dynamoelectric machine 2.

Because of the analogy existing between electrical and mechanical phenomena, the same effect could be obtained in a mechanical system subjected to a forcing oscillation by introducing a viscous friction, an elastic force and a moment of inertia.

Introducing at least one capacitor 7 of suitable value across the terminals of the dynamoelectric machine 2 could be sufficient to damp the mechanical oscillations since at least one resistance component 10 (the internal resistance of the dynamoelectric machine 2) is already present in the circuit.

The variable resistor 8 ensures the easy regulation of the electrical signal in response to the oscillations, thus maintaining the capacitance introduced into the circuit fixed. Alternatively, the capacitance component of the circuit as well as the resistance could be varied.

Only one capacitor 7 is shown in figure 2 for simplicity but it is understood that this could be composed of a battery of interconnected capacitors.

From the mechanical point of view, the dynamoelectric machine 2 is set in rotation at a speed $\Omega$ with torque $T$, and is subject to a load 12 with moment of inertia of value $J$ and to a viscous friction 13 with value $R_v$.

The ideal motor equations are valid for the dynamoelectric machine 2, that is:

$$E = K^*\Omega \qquad (I)$$

$$T = K^*I \qquad (II)$$

in which K is a constant related to the construction characteristics of the motor. The relationship (I) expresses the emf E as a function of the speed of rotation $\Omega$ of the rotor, while the relationship (II) expresses the torque produced T as a function of the current absorbed I by the windings of the motor.

The torque T can also be expressed by the following relationship:

$$T = J^* \frac{d\Omega}{dt} + R_v{}^* \Omega \qquad \text{(III)}$$

in which the $R_v$ factor could be considered negligible in the majority of cases as also, consequently, could the term ($R_v * \Omega$). The integrodifferential equation for the circuit 6 of figure 2 is the following:

$$\frac{1}{Ce} * \int I^* dt + R^* I + L^* \frac{dI}{dt} + E = V° \qquad \text{(IV)}$$

in which R is equal to ($R^e + R^a$), and V° is the voltage at the leads of the capacitor 7 under operating conditions.

Substituting the preceding equations (I-III) and finding derivatives, the second degree differential equation that expresses the speed of rotation of the shaft of the dynamoelectric machine 2 is the following:

$$\frac{L^*J}{K^2}*\Omega'' + \frac{R^*J}{K^2}*\Omega' + (1 + \frac{J}{C^*K^2})^*\Omega = \Omega° \qquad \text{(V)}$$

in which $\Omega°$ represents the operating speed of rotation.

As is well known, the solution of this equation is the sum of a general integral $\Omega g$ of the type ($\alpha * e^{-\beta t}$) and of a particular integral $\Omega p$ that in this case is equal to $\Omega°$.

The values of $\alpha$ and $\beta$ can easily be calculated by traditional mathematical methods.

With respect to the size of the various elements of the device, the dynamoelectric machine 2 must be equal to or superior in power to the product of the parasite torques and the frequency of the oscillations.

For the capacitor 7, or an equivalent battery of interconnected capacitors, the capacitance should not be less than 10,000 $\mu$F, while the maximum resistance value of the variable resistor 8 can be easily selected in function of the value of capacitance introduced into the circuit 6 and of resistance and inductance characteristics of the windings of the dynamoelectric machine 2.

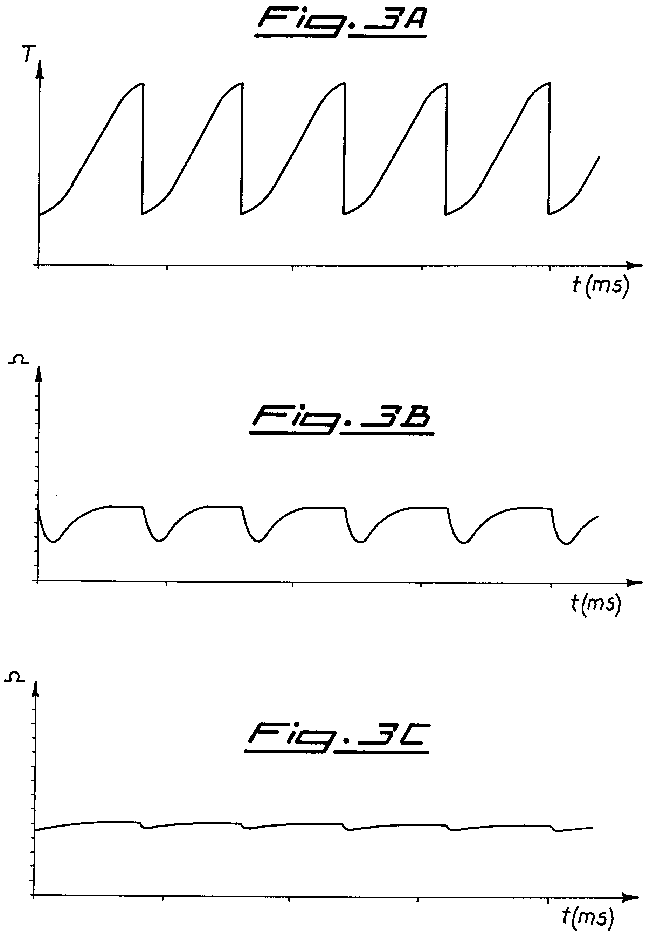

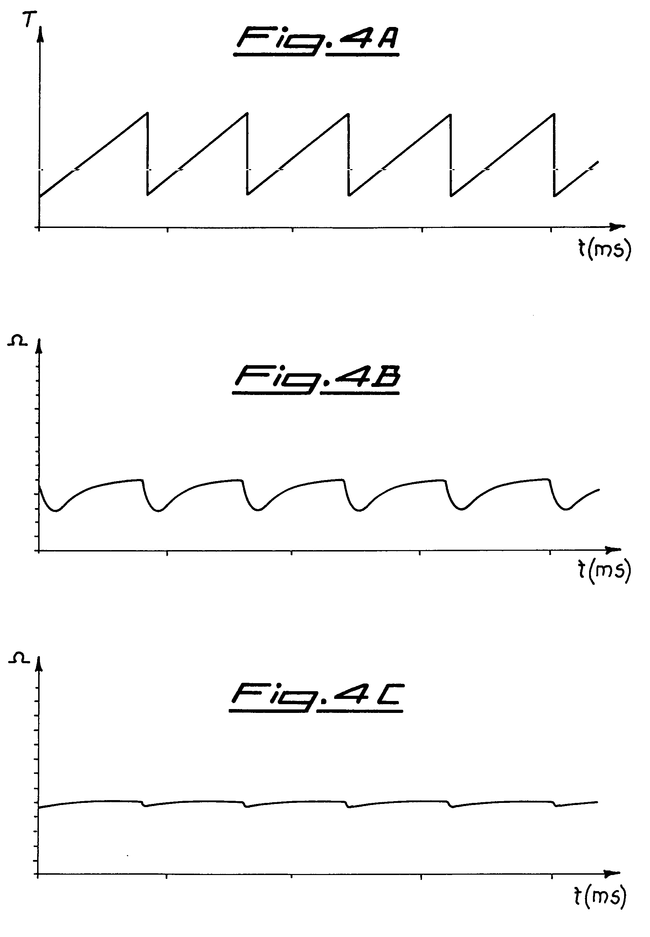

A qualitative example of some tests carried out with different values of the capacitor 7 and of the variable resistor 8 is shown in the figures 3A-3C and in the figures 4A-4C.

Figure 3A shows a graph that illustrates a possible waveform of the excitation torque T, in function of the time t (measured in milliseconds), applied to the shaft of the dynamoelectric machine 2.

Figure 3B shows the waveform resulting from the speed of rotation $\Omega$ of the shaft in function of the time using a capacitor 7 with capacitance of 0.1 F but without any resistor, or setting the resistor 8 to the value of 0 ohm.

It should be noticed that the response waveform in figure 3B has already an acceptable damping.

Figure 3C, shows the waveform of a response of the circuit 6 for the speed of rotation of the shaft of the dynamoelectric machine 2. The capacitor 7 used has a capacitance of 0.01 F, while the resistor 8 was set to 1 ohm. In this case, the values of the resistor and of the capacitor were selected in function of the characteristics of the dynamoelectric machine employed. As will be noticed, the oscillation of the speed is notably reduced compared to the form of wave shown in figure 3B. The introduction of the variable resistor 8 allows the response of the device to be optimized.

Figure 4A shows a graph that illustrates, in function of the time t (measured in milliseconds), another possible waveform of the excitation torque T applied the shaft of the dynamoelectric machine 2.

Also in this case, employing a capacitor 7 with capacitance of 0.1 F, without any resistor 8 in the circuit, an appreciable damping of the oscillations is already gotten (figure 4B). Employing a capacitor 7 with capacitance of 0.01 F and a resistor 8 with resistance set to 1 ohm (the same values used in the case illustrated in figure 3C) a considerable reduction of the oscillations is obtained.

From the similarity between the waveforms of the figures 3C and 4C it can be seen that, accentuating the damping of the oscillations, the response waveform of the speed of rotation of the shaft is substantially independent of the waveform of the excitation torque.

## Claims

1. Device for the damping of the induced oscillations in a rotating shaft, characterized by comprising at least an electrical circuit endowed with suitable components to realize the function of damping and means of coupling between said rotating shaft and said electric circuit to convert mechanical energy to electrical energy.

2. A device according to Claim 1, characterized in that said means of coupling comprise a reversing dynamoelectric machine whose rotor is mechanically connected to said rotating shaft, said electric circuit being connected to the terminals of said dynamoelectric machine.

3. A device according to Claim 1, characterized in that the components of said electric circuit are components of analog type.

4. A device according to Claim 1, characterized by said electric circuit comprising at least one capacitor.

5. A device according to Claim 4, characterized by said electric circuit comprising at least one resistor.

6. A device according to any of the preceding Claims, characterized by at least one of the components of said electric circuit being a component with varying characteristics.

7. A device according to any of the preceding Claims, characterized by the said reversing dynamoelectric machine being of the permanent-magnet excitation type.

8. Motor unit for machine-tool, of the type comprising at least one principal motor that furnishes mechanical power to a machine-tool and means of reducing the induced oscillations on the rotating shaft of said principal motor due to the impact between the tool and a workpiece being machined, characterized by comprising a device according to any of the claims from 1 to 7 for the damping of the induced oscillations in said rotating shaft.

# *Fig.1*

# *Fig.2*

Fig.3A

Fig.3B

Fig.3C

## Fig.4A

## Fig.4B

## Fig.4C